# EUROPEAN PATENT SPECIFICATION

(11) **EP 3 176 200 B1**
(45) Date of publication and mention of the grant of the patent: **17.04.2019**
(21) Application number: 15826619.7
(22) Date of filing: 03.07.2015
(51) Int. Cl.: C08G 59/56, C08J 5/24, C08G 59/62

(54) **TWO-PACK TYPE EPOXY RESIN COMPOSITION FOR FIBER-REINFORCED COMPOSITE MATERIAL, AND FIBER-REINFORCED COMPOSITE MATERIAL**
EPOXIDHARZZUSAMMENSETZUNG FÜR FASERVERSTÄRKTEN VERBUNDSTOFF UND FASERVERSTÄRKTER VERBUNDSTOFF
COMPOSITION DE RÉSINE ÉPOXY À DEUX COMPOSANTS POUR UN MATÉRIAU COMPOSITE RENFORCÉ PAR DES FIBRES, ET MATÉRIAU COMPOSITE RENFORCÉ PAR DES FIBRES

(30) Priority: 31.07.2014 JP 2014155752
(43) Date of publication of application: 07.06.2017
(73) Proprietor: Toray Industries, Inc., Tokyo 103-8666 (JP)
(72) Inventor: HONDO, Kazunori, Nagoya-shi Aichi 455-8502 (JP); TOMIOKA, Nobuyuki, Nagoya-shi Aichi 455-8502 (JP)
(74) Representative: Mewburn Ellis LLP
(86) International application number: PCT/JP2015/069224
(87) International publication number: WO 2016/017371

(56) References cited:
- EP-A1- 1 454 936
- EP-A1- 2 256 163
- JP-A- S6 028 420
- JP-A- S63 159 424
- JP-A- 2013 159 618
- US-A1- 2007 116 962
- DATABASE WPI Week 201336 Thomson Scientific, London, GB; AN 2013-H50917 XP002775701, & JP 2013 095889 A (KYOCERA CHEM CORP) 20 May 2013 (2013-05-20)

## Description

### TECHNICAL FIELD

The present invention relates to a two-pack type epoxy resin composition for a fiber-reinforced composite material which is suitably used as a fiber-reinforced composite material for members for an aeroplane, members for a spacecraft, members for an automobile, and the like, as well as a fiber-reinforced composite material produced using the two-pack type epoxy resin composition.

### BACKGROUND ART

An application of a fiber-reinforced composite material comprising a reinforcing fiber and a matrix resin has been spreading in fields, including sports and general industries, particularly aerospace, because the material enables material designs that make use of the advantages of reinforcing fibers and matrix resins.

As the reinforcing fiber, a glass fiber, an aramid fiber, a carbon fiber, a boron fiber or the like is used. As the matrix resin, both a thermosetting resin and a thermoplastic resin can be, used, though a thermosetting resin is more frequently used because of its ability of easy impregnation into a reinforcing fiber. As the thermosetting resin, an epoxy resin, an unsaturated polyester resin, a vinyl ester resin, a phenolic resin, a bismaleimide resin, a cyanate resin or the like is used.

As a method for molding a fiber-reinforced composite material, a method such as a prepreg method, a hand lay-up method, a filament winding method, a pultrusion method and an RTM (Resin Transfer Molding) method is employed. A prepreg method is a method which gives a molded product by impregnating a reinforcing fiber with an epoxy resin composition to obtain prepregs, laminating the prepregs such that the prepregs have a desired shape, and heating the laminated prepregs. However, though the prepreg method is suitable for producing a fiber-reinforced composite material with high material strength required for the application in structure members for an aeroplane, an automobile and the like, the method requires a large number of processes including the process of preparing prepregs and that of laminating the prepregs, and therefore, the method only enables a small scale production and is not suitable for a large scale production, that is, the method has a problem of low productivity. On the other hand, an RTM method is a method for producing a molded product which comprises putting a reinforcing fiber into a molding mold beforehand, injecting a liquid epoxy resin composition into the molding mold, impregnating the reinforcing fiber with the liquid epoxy resin composition, and conducting heating and curing to give the molded product. By employing the RTM method, a fiber-reinforced composite material can be molded in a short period of time by preparing a molding mold without producing prepregs, and there is a further advantage that a fiber-reinforced composite material with a complex shape can be easily molded.

When employing an RTM method, a hand lay-up method, a filament winding method and a pultrusion method, a two-pack type epoxy resin composition is used in many cases from the viewpoint of molding processability. A two-pack type epoxy resin composition refers to an epoxy resin composition which is constituted by an epoxy base resin liquid which contains an epoxy resin as a main component, and a curing agent liquid which contains a curing agent as a main component, and is obtained by mixing two liquids which are the epoxy base resin liquid and the curing agent liquid immediately before use. On the other hand, an epoxy resin composition containing all the components including a base resin and a curing agent as one mixture is referred to as a one-pack type epoxy resin composition.

In the case of a one-pack type epoxy resin composition, the curing reaction proceeds even during a storage period of the composition, and therefore, a frozen storage is required. In addition, in the case of a one-pack type epoxy resin composition, an agent having a solid form with low reactivity is frequently selected as a component of a curing agent, and therefore, the one-pack type epoxy resin composition should be pushed with high pressure by using a press roll and the like, in order that a reinforcing fiber is impregnated with the one-pack type epoxy resin composition. In the case of a two-pack type epoxy resin composition, a liquid mixture having low viscosity can be obtained after mixing a base resin liquid and a curing agent liquid, since an epoxy base resin liquid and the curing agent liquid are each in a liquid form, and therefore, a reinforcing fiber can be easily impregnated with the epoxy resin composition. In addition, the two-pack type epoxy resin composition can be stored for a long period of time without any particular limitations on the storage conditions, since the epoxy base resin liquid and the curing agent liquid are stored separately.

For example, in order to produce a fiber-reinforced composite material with high efficiency by an RTM method, the reduction in the curing time of a resin is essential. In addition, in most cases, a fiber-reinforced composite material used in the fields of an automobile and an aeroplane requires heat resistance. The modulus of rigidity of a cured product of an epoxy resin drastically decreases at a temperature equal to or higher than the glass transition temperature, and thereby mechanical properties of the fiber-reinforced composite material containing the cure product also decreases. Accordingly, the glass transition temperature of a cured product of a resin is considered to be an indicator of heat resistance of a fiber-reinforced composite material, and the improvement of the glass transition temperature is desired.

In order to solve these problems, an epoxy resin composition for an RTM method having high-speed curability which contains 4-tert-butylcatechol as a curing accelerator is disclosed in Patent Document 1. However, the technique disclosed in Patent Document 1 cannot enable the achievement of sufficient high-speed curability. Further, there have been some cases where problems in surface quality have occurred, for example, voids have appeared in the resulting fiber-reinforced composite material by volatilization of a part of 4-tert-butylcatechol during the heat curing.

In addition, an epoxy resin composition having high-speed curability for an RTM method which contains an acid ester as a curing accelerator is disclosed in Patent Document 2. However, by employing the technique disclosed in Patent Document 1, heat resistance of a cured product of a resin decreases markedly, which is caused by addition of the acid ester. Further, also in this case, there have been some cases where problems in surface quality have occurred, for example, voids have appeared in the resulting fiber-reinforced composite material by volatilization of a part of the acid ester during the heat curing.

As described above, a two-pack type epoxy resin composition for a fiber-reinforced composite material has never existed till now which is capable of producing a cured product of a resin that has high-speed curability in a necessary and sufficient manner in order to realize a high level of productivity of a fiber-reinforced composite material as well as high heat resistance required for the application in structure members for an aeroplane, an automobile and the like, and which is capable of producing a cured product of a resin with high quality without causing a void during the heat curing.

### PRIOR ART DOCUMENTS

### PATENT DOCUMENTS

**Patent** Document 1: Japanese Patent No. 4396274
Patent Document 2: Japanese Translation of PCT Application No. H09-507262 Liquid epoxy resin compositions are disclosed in US-A-2007/0116962 and epoxy resin compositions for fibre-reinforced composite materials are disclosed in EP-A-1454936.

### SUMMARY OF THE INVENTION

### PROBLEMS TO BE SOLVED BY THE INVENTION

An object of the present invention is to improve the disadvantages of the above-described conventional techniques and to provide a two-pack type epoxy resin composition for a fiber-reinforced composite material which is capable of producing a cured product of a resin having high-speed curability as well as high heat resistance and is also capable of producing a fiber-reinforced composite material with high quality, without causing a void during the heat curing.

### SOLUTIONS TO THE PROBLEMS

In order to achieve the above-described object, a two-pack type epoxy resin composition for the fiber-reinforced composite material according to the present invention has the following constituents. That is, the two-pack type epoxy resin composition for the fiber-reinforced composite material comprises components (A) to (C) below, the epoxy resin composition comprising:
an epoxy base resin .liquid which comprises 30 mass% or more and 100 mass% or less of a component (A); and
a curing agent liquid which comprises a component (B), wherein,
the component (A) is a glycidylamine type epoxy resin;
the component (B) is an aromatic amine; wherein the component (B) is a mixture of a liquid aromatic amine and a solid aromatic amine, wherein the term "liquid" refers to state where viscosity at 25°C is 1000 Pa.s or lower and wherein the term "solid" refers to a state where viscosity at 25°C is higher than 1000 Pa.S and
the component (C) is a compound having at least two aromatic rings each of which has a phenolic hydroxy group.

In addition, in order to achieve the above-described object, a fiber-reinforced composite material according to the present invention has the following constituents. That is, the fiber-reinforced composite material is obtained by combining the two-pack type epoxy resin composition for the fiber-reinforced composite material with a reinforcing fiber and curing them.

### EFFECTS OF THE INVENTION

According to the present invention, it is possible to provide a two-pack type epoxy resin composition for a fiber-reinforced composite material which is capable of producing a cured product of a resin having high-speed curability as well as high heat resistance and is also capable of producing a fiber-reinforced composite material with high quality, without causing a void during the heat curing. Accordingly, it is possible to provide a fiber-reinforced composite material at high productivity, according to the present invention.

### EMBODIMENTS OF THE INVENTION

Hereinbelow, preferred embodiments of the present invention will be described.

First, a two-pack type epoxy resin composition for a fiber-reinforced composite material according to the present invention is described.

The two-pack type epoxy resin composition for the fiber-reinforced composite material according to the present invention comprises the following components (A) to (C), the epoxy resin composition comprising:
an epoxy base resin liquid comprising 30 mass% or more and 100 mass% or less of a component (A); and
a curing agent liquid comprising a component (B); wherein,
the component (A) is a glycidylamine type epoxy resin;
the component (B) is an aromatic amine; wherein the component (B) is a mixture of a liquid aromatic amine and a solid aromatic amine, wherein the term "liquid" refers to state where viscosity at 25°C is 1000 Pa.s or lower and wherein the term "solid" refers to a state where viscosity at 25°C is higher than 1000 Pa.S and
the component (C) is a compound having at least two aromatic rings each of which has a phenolic hydroxy group.

The component (A) in the present invention is a glycidylamine type epoxy resin.

Specific examples of the component (A) include polyfunctional glycidylamine type epoxy resins such as N,N,N',N'-tetraglycidyldiaminodiphenylmethane, triglycidylaminophenol, N,N-diglycidylaniline, N,N,N',N'-tetraglycidylxylenediamine, and derivatives and isomers, hydrogenated products thereof such as alkyl-substituted products, aryl-substituted products, alkoxy-substituted products, aryloxy-substituted products and halogen-substituted products thereof. These epoxy resins contribute to an increase in the crosslinking densities of cured products of resins, and therefore, the use of these epoxy resins makes it possible to improve heat resistance of fiber-reinforced composite materials. Among the above-described polyfunctional glycidylamine type epoxy resins, a tri- or higher functional glycidylamine type epoxy resin is preferable, and a tri- or higher functional glycidylamine-type aromatic epoxy resin is particularly preferable. Meanwhile, in the present invention, the term "polyfunctional" refers to having at least two glycidyl groups, and the phrase "trifunctional" refers to having 3 glycidyl groups.

Examples of the tri- or higher functional glycidylamine type epoxy resin to be preferably used include N,N,N',N'-tetraglycidyldiaminodiphenylmethane and triglycidylaminophenol as well as derivatives and isomers thereof. Examples of N,N,N',N'-tetraglycidyldiaminodiphenylmethane as well as derivatives and isomers thereof may include N,N,N',N'-tetraglycidyl-4,4'-diaminodiphenylmethane, N,N,N',N'-tetraglycidyl-3,3'-dimethyl-4,4'-diaminodiphenylm ethane, N,N,N',N'-tetraglycidyl-3,3'-diethyl-4,4'-diaminodiphenylme thane, N,N,N',N'-tetraglycidyl-3,3'-diisopropyl-4,4'-diaminodiphen ylmethane, N,N,N',N'-tetraglycidyl-3,3'-di-t-butyl-4,4'-diaminodipheny lmethane, N,N,N',N'-tetraglycidyl-3,3'-dimethyl-5,5'-diethyl-4,4'-dia minodiphenylmethane, N,N,N',N'-tetraglycidyl-3,3'-diisopropyl-5,5'-diethyl-4,4'-diaminodiphenylmethane, N,N,N',N'-tetraglycidyl-3,3'-diisopropyl-5,5'-dimethyl-4,4' -diaminodiphenylmethane, N,N,N',N'-tetraglycidyl-3,3'-di-t-butyl-5,5'-diethyl-4,4'-d iaminodiphenylmethane, N,N,N',N'-tetraglycidyl-3,3'-di-t-butyl-5,5'-dimethyl-4,4'-diaminodiphenylmethane, N,N,N',N'-tetraglycidyl-3,3',5,5'-tetramethyl-4,4'-diaminod iphenylmethane, N,N,N',N'-tetraglycidyl-3,3',5,5'-tetraethyl-4,4'-diaminodi phenylmethane, N,N,N',N'-tetraglycidyl-3,3',5,5'-tetraisopropyl-4,4'-diami nodiphenylmethane, N,N,N',N'-tetraglycidyl-3,3',5,5'-tetra-t-butyl-4,4'-diamin odiphenylmethane, N,N,N',N'-tetraglycidyl-3,3'-dichloro-4,4'-diaminodiphenylm ethane, N,N,N',N'-tetraglycidyl-3,3'-dibromo-4,4'-diaminodiphenylme thane and the like. In addition, examples of triglycidylaminophenol as well as derivatives and isomers thereof include N,N,O-triglycidyl-p-aminophenol, N,N,O-triglycidyl-m-aminophenol and the like.

The glycidylamine type epoxy resin has an effect of increasing heat resistance of cured products of resins, and it is necessary that the content ratio of the glycidylamine type epoxy resin in the epoxy base resin liquid is 30 mass% or more and 100 mass% or less based on the total mass of the epoxy base resin liquid, and it is preferable that the content ratio is 50 mass% or more. When the content ratio of the glycidylamine type epoxy resin in the epoxy base resin liquid is 30 mass% or more, the compressive strength of the fiber-reinforced composite material increases, and the heat resistance of the cured product of the resin improves.

In addition, at least one kind of epoxy resin other than the component (A), which is selected from a bisphenol-type epoxy resin, a phenol novolac type epoxy resin, a cresol novolac type epoxy resin, a resorcinol type epoxy resin, a phenolaralkyl type epoxy resin, a naphthol aralkyl type epoxy resin, a dicyclopentadiene type epoxy resin, an epoxy resin having a biphenyl skeleton, an isocyanate-modified epoxy resin, a tetraphenylethane type epoxy resin, a triphenylmethane type epoxy resin and the like, may be contained in the epoxy base resin liquid provided that the content of the epoxy resin other than the component (A) is 70 mass% or less based on the total mass of the epoxy base resin liquid.

More specific examples of the epoxy resin other than the component (A) include bisphenol A diglycidyl ether, bisphenol F diglycidyl ether, tetrabromobisphenol A diglycidyl ether, bisphenol AD diglycidyl ether, 2,2',6,6'-tetramethyl-4,4'-biphenoldiglycidyl ether, a diglycidyl ether of 9,9-bis(4-hydroxyphenyl)fluorene, a triglycidyl ether of tris(p-hydroxyphenyl)methane, a tetraglycidyl ether of tetrakis(p-hydroxyphenyl)ethane, phenol novolac glycidyl ether, cresol novolac glycidyl ether, a glycidyl ether of a condensation product of phenol and dicyclopentadiene, a glycidyl ether of a biphenyl aralkyl resin, triglycidyl isocyanurate, 5-ethyl-1,3-diglycidyl-5-methylhydantoin, an oxazolidone type epoxy resin obtained by an addition reaction of bisphenol A diglycidyl ether and tolylene isocyanate, a phenolaralkyl type epoxy resin and the like. Among them, the bisphenol-type epoxy resin is preferably used because the bisphenol-type epoxy resin contributes to the balance between toughness and heat resistance of the cured product of the resin in an excellent manner, and a liquid bisphenol-type epoxy resin is particularly preferably used as the epoxy resin other than the component (A) contained in the epoxy base resin liquid because the liquid bisphenol-type epoxy resin contributes to excellent impregnability of the resin into a reinforcing fiber.

As used herein, the phrase "bisphenol-type epoxy resin" refers to a resin made from a bisphenol compound in which two phenolic hydroxy groups are glycidylated, and examples of the bisphenol-type epoxy resin include a bisphenol A-type epoxy resin, a bisphenol F-type epoxy resin, a bisphenol AD-type epoxy resin, a bisphenol S-type epoxy resin as well as halogen-substituted products, alkyl-substituted products, hydrogenated products of these bisphenol-type epoxy resins, and the like. In addition, as a bisphenol-type epoxy resin, not only a high molecular weight product composed of a single monomer, but also a high molecular weight product having a plurality of repeating units can be suitably used. When a bisphenol-type epoxy resin is contained, the content ratio of the bisphenol-type epoxy resin in the epoxy base resin liquid based on the total mass of the epoxy base resin liquid is preferably 20 mass% or more and 70 mass% or less, and is more preferably 20 mass% or more and 50 mass% or less from the viewpoint of the balance between toughness and heat resistance of the cured product of the resin.

In the present invention, it is particularly preferable to prepare a mixture of a liquid aromatic amine and the solid aromatic amine from the viewpoint of obtaining a cured product of a resin having high heat resistance and high mechanical properties. In other words, in any case, the curing agent liquid contains an aromatic liquid amine. Meanwhile, in the present invention, the term "liquid" refers to a state where a viscosity at 25°C is 1000 Pa•s or lower, and the term "solid" refers to a state where fluidability is not exhibited at 25°C or a state where extremely low fluidability is exhibited at 25°C. Specifically, the term "solid" refers to a state where a viscosity at 25°C is higher than 1000 Pa•s. In the present invention, a viscosity is measured according to "Methods for measuring viscosity by a cone/plate rotational viscometer" prescribed in JIS Z8803 (1991) by using an E-type viscometer equipped with a standard cone rotor (1°34' × R24) (for example, TVE-30H manufactured by Tokimec Inc.).

Those which are classified into aromatic amines such as diethyltoluenediamines such as 2,2'-diethyldiaminodiphenylmethane, 2,4-diethyl-6-methyl-m-phenylenediamine, 4,6-diethyl-2-methyl-m-phenylenediamine and 4,6-diethyl-m-phenylenediamine, 4,4'-methylenebis(N-methylaniline), 4,4'-methylenebis(N-ethylaniline), 4,4'-methylenebis(N-sec-butylaniline) and N,N'-di-sec-butyl-p-phenylenediamine. The use of the liquid aromatic amine is because a cured product of an epoxy resin having high glass transition temperature and high elastic modulus is obtained. Examples of commercially available products of liquid aromatic amines include "jERCURE" (registered trademark) W manufactured by Mitsubishi Chemical Corporation and "Aradur" (registered trademark) 5200 US manufactured by Huntsman Japan KK.

In addition, specific examples of the solid aromatic amine include 4,4'-diaminodiphenylmethane, 3,3'-diaminodiphenyl sulfone, 4,4'-diaminodiphenyl sulfone, 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3'-di-t-butyl-5,5'-diisopropyl-4,4'-diaminodiphenylmethan e, 3,3',5,5'-tetra-t-butyl-4,4'-diaminodiphenylmethane and the like.

The curing agent liquid can be obtained by dissolving, as needed, other components in a mixture of a liquid amine and a solid aromatic amine, and liquidifying all the components.

In the present invention, when a mixture of a liquid amine and a solid aromatic amine is used as a curing agent liquid, the content ratio of the solid aromatic amine is not particularly limited as long as the resulting curing agent liquid is a liquid, but the solid aromatic amine is preferably 80 mass% or less and is more preferably 20 mass% or more and 80 mass% or less based on the total amount of amines from the viewpoint of the balance between impregnability into a reinforcing fiber and mechanical properties of a cured product of a resin.

In the present invention, with regard to the content ratio of the curing agent liquid, a ratio of the total number of active hydrogens (H) in the entire curing agent in the curing agent liquid to the total number of epoxy groups (E) in the entire epoxy resin in the epoxy base resin liquid, that is, H/E preferably satisfies a range of 0.8 or more and 1.1 or less, more preferably satisfies a range of 0.85 or more and 1.05 or less, and even more preferably satisfies a range of 0.9 or more and 1 or less. If H/E is less than 0.8, there are some cases where the reaction ratio of a cured product of a resin is insufficient and where heat resistance, material strength and the like decrease. On the other hand, if H/E is more than 1.1, there are some cases where the impact resistance of a fiber-reinforced composite material is insufficient since the plastic deformation capacity is poor though the reaction ratio of a cured product of a resin is sufficient. When a curing agent liquid contains only the component (B) as a curing agent, H is equal to the total number of active hydrogens in the component (B), and therefore, the content ratio of the component (B) is represented by H/E.

In the present invention, the component (C) is a compound having at least two aromatic rings each of which has a phenolic hydroxy group. In other words, a compound of the component (C) has hydroxyphenyl structures. By making an epoxy resin composition contain the component (C), not only high heat resistance of the resulting cured product of the resin can be secured, but also a high curing speed is enabled, and the problem of volatilization during the curing process does not occur.

Specific examples of the component (C) include Bisphenol A, Bisphenol S, Bisphenol F, biphenol, bisphenolfluorene, 2,2-bis(4-hydroxy-3,5-dimethylphenyl)propane, 4,4'-methylenebis(2,6-dimethylphenol), 4,4'-methylenebis(2,6-di-tert-butylphenol), biphenol, bisphenolfluorene, biscresolfluorene, phenol novolac, cresol novolac and the like. In particular, the component (C) is preferably a bisphenol compound containing at least two phenolic hydroxy groups.

In addition, from the viewpoint of high-speed curability and viscosity stability, an acid dissociation constant (pKa) of the component (C) is preferably 7 or more and 9.8 or less, and is particularly preferably 7 or more and 9 or less. The acid dissociation constant (pKa) of the component (C) is found according to the equation: pKa = -log Ka, by measuring Ka = [H₃O⁺][B⁻]/[BH] (wherein, [H₃O⁺] represents the hydrogen ion concentration, [BH] represents the concentration of the component (C), and [B⁻] represents the concentration of the conjugate base which is obtained by proton release from the component (C)) under the condition in dilute aqueous solution. Examples of the method for measuring pKa include a method which comprises measuring the hydrogen ion concentration by using a pH meter and calculating pKa from the concentration of the substance of interest and the hydrogen ion concentration.

As the component (C), a single compound or a plurality of compounds may be used. When the single compound is used, it is preferable that the acid dissociation constant (pKa) of the compound is in the above-described range, and when the plurality of compounds are used, it is preferable that the acid dissociation constant (pKa) of at least one compound among the plurality of compounds is in the above-described range.

If using only a compound(s) having a acid dissociation constant (pKa) of less than 7 as the component (C), the viscosity stability of the epoxy resin composition obtained after mixing an epoxy base resin liquid and a curing agent liquid tends to markedly decrease and tends to thicken, and therefore, the impregnability of the resin into a base tends to be impaired. On the other hand, if using only a compound(s) having an acid dissociation constant (pKa) of more than 9.8, there are some cases where a sufficient effect of accelerating the curing is not achieved.

The component (C) is normally a low molecular weight compound from the viewpoint of ease of preparation and viscosity stability at a low temperature. As used herein, the phrase "low molecular weight compound" refers to a compound having a molecular weight of 1000 or lower.

The content ratio of the component (C) based on 100 parts by mass of the total of the epoxy resin contained in the epoxy base resin liquid is preferably 1 part by mass or more and 20 parts by mass or less, is more preferably 1 part by mass or more and 15 parts by mass or less, and is particularly preferably 1 part by mass or more and 10 parts by mass or less. If the content ratio of the component (C) is less than 1 part by mass, a sufficient effect of accelerating the curing cannot be achieved, and on the other hand, if the content ratio of the component (C) is more than 20 parts by mass, there are some cases where heat resistance of cured products of the resins markedly decrease.

The epoxy resin composition according to the present invention may contain a plasticizer, a dye, a pigment, an inorganic filler, an antioxidant, an ultraviolet absorber, a coupling agent, a surfactant and the like, as needed. In addition, the epoxy resin composition according to the present invention may contain a toughness-imparting agent such as core-shell polymer particles, as needed.

The epoxy resin composition according to the present invention is a two-pack type composition composed of the epoxy base resin liquid which contains the component (A) in the above-described content ratio and the curing agent liquid which contains the component (B), and is used by mixing the epoxy base resin liquid and the curing agent liquid immediately before use such that the above-described content ratio is achieved. Meanwhile, the component (C) may be contained either in the epoxy base resin liquid or in the curing agent liquid, but it is preferable that the component (C) is contained in the curing agent liquid. It is preferable that both the epoxy base resin liquid and the curing agent liquid are separately warmed before being mixed, and it is preferable that the epoxy resin composition is obtained by mixing the epoxy base resin liquid and the curing agent liquid immediately before use such as the injection into a molding mold by using a mixer from the viewpoint of the usable time of the resin.

The epoxy resin composition according to the present invention preferably has a viscosity at 70°C of 10 mPa•s or higher and 500 mPa•s or lower, and more preferably 10 mPa•s or higher and 250 mPa•s or lower. When the epoxy resin composition has a viscosity at 70°C of 500 mPa•s or lower, impregnability into a reinforcing fiber tends to be excellent, and therefore, a high quality fiber-reinforced composite material is obtained. In addition, when the epoxy resin composition has a viscosity at 70°C of 10 mPa•s or higher, a viscosity at a molding temperature tends not to be too low, and therefore, pit generation caused by sucking the air during the injection into a reinforcing fiber base can be suppressed, and then impregnation tends not to be ununiform. Meanwhile, a viscosity is defined to be a viscosity of an epoxy resin composition measured immediately after mixing two liquids, that is, an epoxy base resin liquid and a curing agent liquid.

The fiber-reinforced composite material obtained by using the epoxy resin composition according to the present invention can be suitably used for the application to industrial materials, particularly to aeroplane materials and automobile materials. Examples of the method for molding the fiber-reinforced composite material include a hand lay-up method, a filament winding method, a pultrusion method, an RTM method and the like, and since these methods require the curing in a short period of time, the use of an epoxy resin composition having high-speed curability is required, and therefore, the epoxy resin composition according to the present invention is suitably used.

In addition, the curing time required for forming the fiber-reinforced composite material depends on the gelation time of the epoxy resin composition used for forming the fiber-reinforced composite material, and the shorter the gelation time of the epoxy resin composition is, the shorter the curing time required for the formation of the fiber-reinforced composite material is. Accordingly, in order to improve productivity of the fiber-reinforced composite material, the epoxy resin composition preferably has a gelation time at a molding temperature of 5 minutes or shorter, and more preferably 4 minutes or shorter. In other words, the shorter the gelation time is, the better. As used herein, the gelation time can be measured in the following manner. Specifically, the gelation time is measured by a method comprising charging an epoxy resin composition obtained immediately after mixing two liquids, which are an epoxy base resin liquid and a curing agent liquid, as a sample into a die which has been heated to 180°C, loading torsional stress, and measuring an increase in viscosity of the sample accompanied by the progress in curing as a torque transmitted to the die by using a vulcanization/curing characteristics testing machine (for example, "Curelastometer" (registered trademark) type V manufactured by JSR trading Co., Ltd.) . The gelation time is defined to be a time period required for achieving the torque of 0.001 N•m after the initiation of the measurement. The molding temperature is appropriately regulated usually in a temperature range of 120°C or higher and 200°C or lower, depending on the kinds of the component (B) and the component (C) to be used. For example, when a mixture of diethyltoluenediamine, 4,4'-diaminodiphenyl sulfone and 3,3'-diaminodiphenyl sulfone is used as the component (B) and Bisphenol A is used as the component (C), the curing temperature is adjusted in a temperature range of 180°C or higher and 200°C or lower, in order to make the gelation time 5 minutes or shorter.

Heat resistance of a fiber-reinforced composite material obtained by using an epoxy resin composition depends on the glass transition temperature of the cured product of the resin obtained by curing the epoxy resin composition, and therefore, in order to obtain a fiber-reinforced composite material having high heat resistance, the glass transition temperature of the cured product of the resin, which is obtained by the complete curing of the epoxy resin composition achieved for example by heating the epoxy resin composition at a temperature of 180°C for 2 hours or the like, is preferably 170°C or higher and 250°C or lower, and more preferably 180°C or higher and 220°C or lower. If a cured product of a resin has a glass transition temperature of lower than 170°C, there are some cases where the heat resistance is insufficient. If a cured product of a resin has a glass transition temperature of higher than 250°C, the crosslinking density of a three-dimensional cross-linked structure becomes high, and the cured product of the resin tends to be fragile, and therefore, there are some cases where the tensile strength and impact resistance of the fiber-reinforced composite material decrease. As used herein, a glass transition temperature of a cured product of a resin is determined according to a DMA measurement method. Meanwhile, the glass transition temperature is sometimes abbreviated as Tg.

The fiber-reinforced composite material according to the present invention is obtained by combining the two-pack type epoxy resin composition for the fiber-reinforced composite material with a reinforcing fiber and curing them. As the molding method to obtain the fiber-reinforced composite material according to the present invention, a molding method which uses a two-pack type resin, such as a hand lay-up method, a filament winding method, a pultrusion method or an RTM method, is suitably used as described above. Among these methods, an RTM method is particularly suitably used from the viewpoint of productivity as well as the flexibility in the shape of the resulting molded product, and the like. The RTM method is a method for producing a reinforcing fiber composite material which comprises injecting a resin into a molding mold in which a reinforcing fiber base has been placed and curing them to give the reinforcing fiber composite material.

Examples of the reinforcing fiber which can be used include a carbon fiber, a glass fiber, an aramid fiber, a boron fiber, a PBO fiber, a high tenacity polyethylene fiber, an alumina fiber, a silicon carbide fiber and the like. These fibers may be use as a mixture of 2 or more kinds of fibers. The arrangement and the form of the reinforcing fiber are not limited, and for example, long fibers aligned in one direction, a single tow as well as fiber structures (fiber bases) such as a woven fabric, a knitted article, a nonwoven fabric, a mat and a braid can be used.

In particular, in the application where high degrees of weight reduction and high strengthening of a material are required, a carbon fiber can be suitably used as the reinforcing fiber because the carbon fiber exhibits an excellent specific elastic modulus and an excellent specific strength.

When a carbon fiber is used as a reinforcing fiber, any kind of carbon fibers can be used depending on the intended use, but it is preferable to use a carbon fiber having a tensile elastic modulus of at most 400 GPa, and preferably from 230 to 400 GPa, from the viewpoint of the interlayer toughness and impact resistance. In addition, it is preferable to use a carbon fiber having a tensile strength of at least 4.4 GPa, and preferably from 4.4 to 6.5 GPa, from the viewpoint of obtaining a fiber-reinforced composite material having high stiffness and high mechanical strength. Further, a tensile elongation is also an important factor, and it is preferable to use a carbon fiber having a tensile elongation of at least 1.7%, and preferably from 1. 7 to 2.3%. Accordingly, a carbon fiber having characteristics, in which the tensile elastic modulus, the tensile strength and the tensile elongation fall within the above-described ranges, is the most suitable.

Examples of commercially available products of a carbon fiber include "TORAYCA" (registered trademark) T800G-24K, "TORAYCA" (registered trademark) T800S-24K, "TORAYCA" (registered trademark) T700G-24K, "TORAYCA" (registered trademark) T300-3K, "TORAYCA" (registered trademark) T700S-12K (all of the above are manufactured by Toray Industries, Inc.), and the like.

For a fiber-reinforced composite material used in the field of an aeroplane, high heat resistance and high wet heat resistance as well as high mechanical properties such as high compressive strength are required. The fiber-reinforced composite material according to the present invention is usually capable of making the glass transition temperature of a matrix resin, which is the cured product of the epoxy resin, 170°C or higher and 250°C or lower, and therefore, the fiber-reinforced composite material is excellent in heat resistance and wet heat resistance. In addition, the compressive strength of the fiber-reinforced composite material depends on the generation amount of voids (air gaps), in the fiber-reinforced composite material, generated by volatilization of components in the epoxy resin composition and the like, and therefore, it is preferable that an indicator of the generation amount of voids, that is, a void fraction is less than 0.1%. As used herein, the void - fraction of a fiber-reinforced composite material is the ratio expressed by the percentage of the area occupied by the parts of voids to the area of an arbitrary region, when a polished cut surface is observed by an optical microscope. As described above, the fiber-reinforced composite material having both a high heat resistance and a low void fraction has a high H/W 0° compressive strength, which is a compressive strength at 0° at moisture heat conditions, and for example, the fiber-reinforced composite material is capable of exhibiting a high H/W 0° compressive strength as high as 1100 MPa or higher.

### EXAMPLES

Hereinbelow, the present invention will be described in more detail by way of examples. Examples 11, 14 and 15 do not illustrate claim 1.

### <Resin materials>

For producing the resin compositions in Examples and Comparative Examples, the resin materials described below were used. Meanwhile, the numerical value of each component shown in the column of each of the resin compositions in Tables 1 to 3 indicates the content ratio of the respective component, and unless otherwise specified, the unit used to express the content ratio is "parts by mass."
1. Epoxy resins each of which is the component (A)
   - "Araldite" (registered trademark) MY721 (manufactured by Huntsman Advanced Materials): tetraglycidyldiaminodiphenylmethane
   - "Araldite" (registered trademark) MY0600 (manufactured by Huntsman Advanced Materials): triglycidyl-m-aminophenol
2. Epoxy resins other than the component (A)
   - "EPON" (registered trademark) 825 (manufactured by Mitsubishi Chemical Corporation): a bisphenol A-type epoxy resin (viscosity: 7000 mPa•s (25°C))
   - "Celloxide" (registered trademark) 2021P (manufactured by Daicel Corporation): an alicyclic epoxy resin (viscosity: 350 mPa•s (25°C))
3. Aromatic amines each of which is the component (B)
   - "jERCURE" (registered trademark) W (manufactured by Mitsubishi Chemical Corporation): diethyltoluenediamine (viscosity: 160 mPa•s (25°C))
   - "Kayahard" (registered trademark) A-A (manufactured by Nippon Kayaku Co., Ltd.): 2,2'-diethyl-4,4'-diaminodiphenylmethane (viscosity: 2000 mPa•s (25°C))
   - "Lonzacure" (registered trademark) M-MIPA (manufactured by Lonza Japan): 3,3'-diisopropyl-5,5'-dimethyl-4,4'-diaminodiphenylmethane (viscosity: > 1000 Pa•s (25°C))
   - "Lonzacure" (registered trademark) M-DIPA (manufactured by Lonza Japan): 3,3',5,5'-tetraisopropyl-4,4'-diaminodiphenylmethane (viscosity: > 1000 Pa•s (25°C))
4. Alicyclic amine
   - "Ancamine" (registered trademark) 2049 (manufactured by Air Products and Chemicals, Inc.): 4,4'-methylenebis(2-methylcyclohexylamine) (viscosity: 120 mPa•s (25°C))
5. Compounds each of which is the component (C) and each having at least two aromatic rings each of which has a phenolic hydroxy group
   • Bisphenol A (manufactured by KANTO CHEMICAL CO., INC.): 4,4'-isopropylidenediphenol (pKa: 10.2)
   • Bisphenol S (manufactured by KANTO CHEMICAL CO., INC.): 4,4'-sulfonyldiphenol (pKa: 7.8)
   • Phenol novolac resin: H-4 (manufactured by Meiwa Plastic Industries, Ltd.) (pKa: 9.8)
6. Phenol compound other than the component (C)
   - 4-tert-Butylcatechol: DIC-TBC (manufactured by DIC Corporation)
7. Acid ester
   - p-Toluenesulfonic acid n-propyl ester (manufactured by Tokyo Chemical Industry Co., Ltd.)

### <Preparation of epoxy resin composition>

An epoxy resin such as a glycidylamine type epoxy resin, that is the component (A), was used for an epoxy base resin liquid, and an amine compound such as an aromatic amine, that is the component (B), as well as a phenol compound such as a compound having at least two aromatic rings each of which has a phenolic hydroxy group, that is the component (C), or an acid ester compound were used for a curing agent liquid, and they were mixed at each content ratio shown in any of Tables 1 to 3 to prepare an epoxy resin composition.

### <Measurement of viscosity>

A viscosity of a sample to be measured was measured according to "Methods for measuring viscosity by a cone/plate rotational viscometer" prescribed in JIS Z8803 (1991) by using an E-type viscometer equipped with a standard cone rotor (1°34' x R24), while keeping a temperature set to the measurement. As the E-type viscometer, TVE-30H manufactured by Tokimec Inc. was used. Meanwhile, an epoxy resin composition obtained immediately after mixing two liquids, which were an epoxy base resin liquid and a curing agent liquid, was used as the sample.

### <Measurement of gelation time>

A gelation time was measured by a method comprising charging an epoxy resin composition obtained immediately after mixing two liquids, which were an epoxy base resin liquid and a curing agent liquid, as a sample into a die which had been heated to 180°C, loading torsional stress, and measuring an increase in viscosity of the sample accompanied by the progress in curing as a torque transmitted to the die by using a vulcanization/curing characteristics testing machine "Curelastometer" (registered trademark) type V manufactured by JSR trading Co., Ltd. The gelation time was defined to be a time period required for achieving a torque of 0.001 N•m after the initiation of the measurement.

### <Preparation of cured resin plate>

The epoxy resin composition prepared as described above was defoamed in vacuum, and thereafter, the epoxy resin composition was injected into a mold in which the spaces were set to have a thickness of 2 mm by using spacers each having a thickness of 2 mm and being made of "Teflon" (registered trademark). The epoxy resin composition was heated at a temperature of 180°C for two hours such that the composition was cured to give cured resin plates each having a thickness of 2 mm.

### <Measurement of glass transition temperature (Tg) of cured product of resin>

A test piece with a width of 12.7 mm and a length of 40 mm was cut out from a cured resin plate, and Tg was measured by using a DMA (ARES manufactured by TA Instruments Japan Inc.). The measurement condition was a temperature rising rate of 5°C/min. The inflection-point temperature of the storage elastic modulus G' obtained by the measurement was taken as Tg.

### <Preparation of fiber-reinforced composite material>

A unidirectional fabric of carbon fibers (a plane weave structure; warp: a carbon fiber T800S-24K-10C manufactured by Toray Industries, Inc.; a weight per area of carbon fibers: 295 g/m²; a warp density: 7.2 threads/25 mm; woof: a glass fiber ECE225 1/0 1Z manufactured by Nitto Boseki Co., Ltd.; a woof density: 7.5 threads/25 mm), was cut out as a sheet with a size of 395 mm × 395 mm, and 4 fabric sheets were laminated such that carbon fibers were aligned in a direction of 0° by setting the direction of carbon fibers as 0°. The laminated fabric sheets were set on a metallic mold having a plate-like cavity with a size of 400 mm × 400 mm × 1.2 mm, and then the mold clamping was performed. Subsequently, after the metallic mold was warmed to 80°C, an epoxy resin composition which was prepared in the above-described manner and which had been warmed to 80°C beforehand was injected into the metallic mold by using a resin injector at an injection pressure of 0.2 MPa. After injecting the resin, the resin was subjected to a pre-curing step, and thereafter, an intermediate of a fiber-reinforced composite material was demolded. In the pre-curing step, the temperature of the metallic mold was raised to 130°C at a temperature rising rate of 1.5°C/min, and then heated at 130°C for 2 hours, and thereafter, the temperature was lowered to 30°C. Then, the demolded intermediate of the fiber-reinforced composite material was subjected to a post-curing step so as to obtain the fiber-reinforced composite material. In the post-curing step, the temperature of the fiber-reinforced composite material was raised from 30°C to 180°C at a temperature rising rate of 1.5°C/min, and the fiber-reinforced composite material was heated at 180°C for 2 hours, and thereafter, the temperature was lowered to 30°C.

### <Measurement of H/W 0° compressive strength of fiber-reinforced composite material>

From the fiber-reinforced composite material which was obtained in the above-described manner, a test piece for 0° compressive strength measurement with 79.4 mm length × 12.7 mm width was cut out such that the length direction was the same as the 0° direction. The test piece was immersed in warm water at 72°C for 14 days, and thereafter, the 0° compressive strength of the fiber-reinforced composite material was measured. The 0° compressive strength was measured according to ASTM D695 by using a universal materials testing machine (Instron model 4208 manufactured by Instron Japan) as a testing machine, with a crosshead speed at the measurement of 1.27 mm/min and with a measuring temperature of 82°C.

### (Examples 1 to 5)

Each epoxy resin composition with the content ratio shown in Table 1 was prepared in the above-described manner, and the viscosity at 70°C and the gelation time were measured. In addition, a cured resin plate and a fiber-reinforced composite material were prepared by using each epoxy resin composition, and Tg, the void fraction and the H/W 0° compressive strength were measured. By adding 1 part by mass or more and 20 parts by mass or less of Bisphenol S, as the component (C), based on 100 parts by mass of the total of the epoxy resin in the epoxy base resin liquid, it became possible that the gelation time was reduced to 5 minutes or shorter. Further, Tg of the cured product of the resin was kept at 170°C or higher, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1100 MPa or higher, and the fiber-reinforced composite material was good in all of the quality, the heat resistance and the mechanical properties.

### (Examples 6 to 9)

Each epoxy resin composition with the content ratio shown in Table 1 was prepared by changing the content ratios of MY721 and EPON825 in the epoxy base resin liquid of Example 2, and the viscosity at 70°C and the gelation time were measured. In addition, a cured resin plate and a fiber-reinforced composite material were prepared by using each epoxy resin composition, and Tg, the void fraction and the H/W 0° compressive strength were measured. In the mass ratio, MY721/EPON825 was changed to 100/0 in Example 6, to 80/20 in Example 7, to 50/50 in Example 8 and to 30/70 in Example 9, but in each Example, the gelation time was 5 minutes or shorter. Further, Tg of the cured product of the resin was kept at 170°C or higher, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1100 MPa or higher, and the fiber-reinforced composite material was good in all of the quality, the heat resistance and the mechanical properties.

### (Example 10)

An epoxy resin composition with the content ratio shown in Table 1 was prepared by using MY0600 instead of MY721 in the epoxy base resin liquid of Example 2, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 3.5 minutes. Further, Tg of the cured product of the resin was 182°C, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1180 MPa, and the fiber-reinforced composite material was good in all of the quality, the heat resistance and the mechanical properties.

### (Examples 11 to 13) (Example 11 is not according to claim 1)

Each epoxy resin composition with the content ratio shown in Table 1 was prepared by changing the content ratios of the liquid aromatic amine and the solid aromatic amine in the curing agent liquid of Example 2, and the viscosity at 70°C and the gelation time were measured. In addition, a cured resin plate and a fiber-reinforced composite material were prepared by using each epoxy resin composition, and Tg, the void fraction and the H/W 0° compressive strength were measured. In the mass ratio, jERCURE W/(M-MIPA + M-DIPA) was changed to 100/0 in Example 11, to 80/20 in Example 12, and to 20/80 in Example 13, but in each Example, the gelation time was 5 minutes or shorter. Further, Tg of the cured product of the resin was kept at 170°C or higher, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1100 MPa or higher, and the fiber-reinforced composite material was good in all of the quality, the heat resistance and the mechanical properties.

### (Example 14) (not according to claim 1)

An epoxy resin composition with the content ratio shown in Table 1 was prepared by using Ancamine 2049 which is a liquid alicyclic amine instead of jERCURE W in Example 2, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 3.3 minutes. Further, Tg of the cured product of the resin was 179°C, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1100 MPa, and the fiber-reinforced composite material was good in all of the quality, the heat resistance and the mechanical properties.

### (Example 15) (not according to claim 1)

An epoxy resin composition with the content ratio shown in Table 2 was prepared by using Kayahard A-A as a liquid aromatic amine instead of jERCURE W in Example 2, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 4.5 minutes. Further, Tg of the cured product of the resin was 181°C, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1120 MPa, and the fiber-reinforced composite material was good in all of the quality, the heat resistance and the mechanical properties.

### (Examples 16 to 18)

Each epoxy resin composition with the content ratio shown in Table 2 was prepared in the same manner as in Example 2, except that Bisphenol A was used as the component (C) instead of Bisphenol S and that the addition amount of the component (C) was changed, and the viscosity at 70°C and the gelation time were measured. In addition, a cured resin plate and a fiber-reinforced composite material were prepared by using each epoxy resin composition, and Tg, the void fraction and the H/W 0° compressive strength were measured. By adding 3 parts by mass or more and 10 parts by mass or less of the component (C), based on 100 parts by mass of the total of the epoxy resin in the epoxy base resin liquid, it became possible that the gelation time was reduced to 5 minutes or shorter. Further, Tg of the cured product of the resin was kept at 170°C or higher, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1100 MPa or higher, and the fiber-reinforced composite material was good in all of the quality, the heat resistance and the mechanical properties.

### (Example 19)

An epoxy resin composition with the content ratio shown in Table 2 was prepared in the same manner as in Example 6, except that Bisphenol A was used as the component (C) instead of Bisphenol S and that the addition amount of the component (C) was changed to 20 parts by mass based on 100 parts by mass of the total of the epoxy resin in the epoxy base resin liquid, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 1.5 minutes. Further, Tg of the cured product of the resin was 175°C, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1140 MPa, and the fiber-reinforced composite material was good in all of the quality, the heat resistance and the mechanical properties.

### (Examples 20 to 22)

Each epoxy resin composition with the content ratio shown in Table 2 was prepared in the same manner as in Example 2, except that H-4 was used as the component (C) instead of Bisphenol S and that the addition amount of the component (C) was changed, and the viscosity at 70°C and the gelation time were measured. In addition, a cured resin plate and a fiber-reinforced composite material were prepared by using each epoxy resin composition, and Tg, the void fraction and the H/W 0° compressive strength were measured. By adding 5 parts by mass or more and 15 parts by mass or less of the component (C), based on 100 parts by mass of the total of the epoxy resin in the epoxy base resin liquid, it became possible that the gelation time was reduced to 5 minutes or shorter. Further, Tg of the cured product of the resin was kept at 170°C or higher, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1100 MPa or higher, and the fiber-reinforced composite material was good in all of the quality, the heat resistance and the mechanical properties.

### (Example 23)

An epoxy resin composition with the content ratio shown in Table 2 was prepared in the same manner as in Example 6, except that H-4 was used as the component (C) instead of Bisphenol S and that the addition amount of the component (C) was changed to 20 parts by mass based on 100 parts by mass of the total of the epoxy resin in the epoxy base resin liquid, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 1.3 minutes. Further, Tg of the cured product of the resin was 176°C, and both the high-speed curability and the heat resistance were good. Furthermore, with regard to the cured product of the resin, the generation of voids was not observed, and therefore, the cured product of the resin having high surface quality was obtained. Also with regard to the fiber-reinforced composite material, the void fraction was less than 0.1%, the H/W 0° compressive strength was 1150 MPa, and the fiber-reinforced composite material was good in all of the quality, the heat resistance and the mechanical properties.

### (Comparative Example 1)

An epoxy resin composition with the content ratio shown in Table 3 was prepared in the same manner as in Example 2, except that no component (C) was added, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 8.3 minutes and Tg of the cured product of the resin was 190°C. Though the heat resistance was good, the curability was lower as compared to Examples . Accordingly, the result that both the high-speed curability and the high heat resistance were satisfied could not be obtained. In addition, with regard to the fiber-reinforced composite material, the void fraction was less than 0.1%, the H/W 0° compressive strength was 1260 MPa, and the fiber-reinforced composite material was good in all of the quality, the heat resistance and the mechanical properties.

### (Comparative Examples 2 to 4)

Each epoxy resin composition with the content ratio shown in Table 3 was prepared in the same manner as in Example 2, except that 4-tert-butylcatechol was used instead of Bisphenol S, which is the component (C), and that the addition amount of 4-tert-butylcatechol was changed, and the viscosity at 70°C and the gelation time were measured. In addition, a cured resin plate and a fiber-reinforced composite material were prepared by using each epoxy resin composition, and Tg, the void fraction and the H/W 0° compressive strength were measured. Though 1 part by mass or more and 5 parts by mass or less of 4-tert-butylcatechol was added, based on 100 parts by mass of the total of the epoxy resin in each epoxy base resin liquid, the gelation time could not be reduced to 5 minutes or shorter and Tg of the cured product of the resin could not be kept at 170°C or higher. Accordingly, the result that both the high-speed curability and the high heat resistance were satisfied could not be obtained. Further, volatilization of a component(s) was observed during the heat curing, and deterioration of the surface quality of the cured product of the resin caused by voids was partly observed. Also with regard to the fiber-reinforced composite material, the void fraction was 0.1% or more, the H/W 0° compressive strength was lower than 1100 MPa, and the result that all of the high quality, the high heat resistance and the good mechanical properties were satisfied could not be obtained.

### (Comparative Examples 5 to 7)

Each epoxy resin composition with the content ratio shown in Table 3 was prepared in the same manner as in Example 2, except that p-toluenesulfonic acid propyl ester was used instead of Bisphenol S, which is the component (C), and that the addition amount of p-toluenesulfonic acid propyl ester was changed, and the viscosity at 70°C and the gelation time were measured. In addition, a cured resin plate and a fiber-reinforced composite material were prepared by using each epoxy resin composition, and Tg, the void fraction and the H/W 0° compressive strength were measured. Though 1 part by mass or more and 5 parts by mass or less of p-toluenesulfonic acid propyl ester was added, based on 100 parts by mass of the total of the epoxy resin in each epoxy base resin liquid, the gelation time could not be reduced to 5 minutes or shorter and Tg of the cured product of the resin could not be kept at 170°C or higher. Accordingly, the result that both the high-speed curability and the high heat resistance were satisfied could not be obtained. Further, volatilization of a component(s) was observed during the heat curing, and deterioration of the surface quality of the cured product of the resin caused by voids was partly observed. Also with regard to the fiber-reinforced composite material, the void fraction was 0.1% or more, the H/W 0° compressive strength was lower than 1100 MP, and the result that all of the high quality, the high heat resistance and the good mechanical properties were satisfied could not be obtained.

### (Comparative Examples 8 and 9)

Each epoxy resin composition with the content ratio shown in Table 3 was prepared by changing the content ratios of MY721 and EPON825 in the epoxy base resin liquid of Example 2, and the viscosity at 70°C and the gelation time were measured. In addition, a cured resin plate and a fiber-reinforced composite material were prepared by using each epoxy resin composition, and Tg, the void fraction and the H/W 0° compressive strength were measured. In the mass ratio, MY721/EPON825 was changed to 20/80 in Comparative Example 8, and was changed to 0/100 in Comparative Example 9, but in each case, the gelation time could not be reduced to 5 minutes or shorter and Tg of the cured product of the resin could not be kept at 170°C or higher. Accordingly, the result that both the high-speed curability and the high heat resistance were satisfied could not be obtained. Further, no voids were generated in the cured product of the resin, and the cured product of the resin having high surface quality was obtained. However, with regard to the fiber-reinforced composite material, the void fraction was less than 0.1%, but the H/W 0° compressive strength was lower than 1100 MPa, and the result that all of the high quality, the high heat resistance and the good mechanical properties were satisfied could not be obtained.

### (Comparative Example 10)

An epoxy resin composition with the content ratio shown in Table 3 was prepared by changing EPON825 in the epoxy base resin liquid of Comparative Example 8 to Celloxide 2021P, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was longer than 10 minutes and Tg of the cured product of the resin was 151°C. As compared to Examples, both the curing-speed and the heat resistance were low, and satisfactory results could not be obtained. Further, no voids were generated in the cured product of the resin, and the cured product of the resin having high surface quality was obtained. However, with regard to the fiber-reinforced composite material, the void fraction was less than 0.1%, but the H/W 0° compressive strength was 750 MPa, and the result that all of the high quality, the high heat resistance and the good mechanical properties were satisfied could not be obtained.

### (Comparative Example 11)

An epoxy resin composition with the content ratio shown in Table 3 was prepared by using Ancamine 2049, which is an alicyclic amine, instead of the aromatic amine in the curing agent liquid of Example 2, and the viscosity at 70°C and the gelation time were measured. In addition, a cured resin plate and a fiber-reinforced composite material were prepared by using the epoxy resin composition, and Tg, the void fraction and the H/W 0° compressive strength were measured. The gelation time was 2.0 minutes and Tg of the cured product of the resin was 168°C. Though the high-speed curability was achieved, the heat resistance was lower than Examples, and the result that both the high-speed curability and the high heat resistance were satisfied could not be obtained. Further, no voids were generated in the cured product of the resin, and the cured product of the resin having high surface quality was obtained. However, with regard to the fiber-reinforced composite material, the void fraction was less than 0.1%, but the H/W 0° compressive strength was 800 MPa, and the result that all of the high quality, the high heat resistance and the good mechanical properties were satisfied could not be obtained.

### (Comparative Example 12)

An epoxy resin composition with the content ratio shown in Table 3 was produced by using only Lonzacure M-MIPA and Lonzacure M-DIPA, both of which are solid aromatic amines, as the curing agent instead of that of Example 2, and compounding. the epoxy resin, the curing agent and Bisphenol S, which is the component (C), as a one-pack type liquid composition, and the viscosity at 70°C and the gelation time were measured. In addition, a cured resin plate and a fiber-reinforced composite material were produced by using the epoxy resin composition, and Tg, the void fraction and the H/W 0° compressive strength were measured. The gelation time was longer than 10 minutes and Tg of the cured product of the resin was 190°C. Though the heat resistance was good, the curability was lower than Examples, and the result that both the high-speed curability and the high heat resistance were satisfied could not be obtained. Further, the viscosity of the resin at 70°C was 1000 mPa•s, which was higher than Examples, and there were some cases where the impregnability into the reinforcing fiber was inferior. Furthermore, with regard to the cured product of the resin, no voids were generated in the cured product of the resin, and the cured product of the resin having high surface quality was obtained. However, with regard to the fiber-reinforced composite material, the void fraction was less than 0.1%, but the H/W 0° compressive strength was 1090 MPa, and the result that all of the high quality, the high heat resistance and the good mechanical properties were satisfied could not be obtained.

As described above, the two-pack type epoxy resin composition for the fiber-reinforced composite material according to the present invention is excellent both in the high-speed curability and the heat resistance, and therefore, makes it possible to obtain a fiber-reinforced composite material with high performance in a short period of time and with good productivity, for example, by an RTM method. In addition, the two-pack type epoxy resin composition for the fiber-reinforced composite material according to the present invention is also excellent for molding a fiber-reinforced composite material having a large size, and is particularly suitable for the application to members for an aeroplane and an automobile.

**[Table 1]**

| | | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|---|
| Epoxy resin composition | Component (A) Glycidylamine type epoxy resins | | MY721 | 60 | 60 | 60 | 60 | 60 | 100 | 80 | 50 | 30 | 0 | 60 | 60 | 60 | 60 |
| | | | MY0600 | 0 | 0 | 0 | 0 | 0 | 0 | 0 | 0 | 0 | 60 | 0 | 0 | 0 | 0 |
| | Epoxy resins other than Comporent (A) | | EPON825 | 40 | 40 | 40 | 40 | 40 | 0 | 20 | 50 | 70 | 40 | 40 | 40 | 40 | 40 |
| | | | Celloxide 2021P | 0 | 0 | 0 | 0 | 0 | 0 | 0 | 0 | 0 | 0 | 0 | 0 | 0 | 0 |
| | Component (B) Aromatic amines | Liquid | jERCURE W | 25.1 | 25.1 | 25.1 | 25.1 | 25.1 | 29.4 | 27.1 | 24.1 | 22.3 | 24.5 | 34.2 | 30.2 | 10.9 | - |
| | | | Kayahard A-A | - | - | - | - | - | - | - | - | - | - | - | - | - | - |
| | | Solid | Lonzacure M-MIPA | 8.3 | 8.3 | 8.3 | 8.3 | 8.3 | 9.8 | 9.1 | 8.0 | 7.4 | 8.2 | - | 3.8 | 21.9 | 10.3 |
| | | | Lonzacure M-DIPA | 8.3 | 8.3 | 8.3 | 8.3 | 8.3 | 9.8 | 9.1 | 8.0 | 7.4 | 8.2 | - | 3.8 | 21.9 | 10.3 |
| | Alicyclic | amine | Ancamine 2049 | - | - | - | - | - | - | - | - | - | - | - | - | - | 23.2 |
| | Component (C) Compounds having at least two aromatic rings having phenolic hydroxy groups | | Bisphenol S | 1 | 3 | 5 | 7 | 20 | 3 | 3 | 3 | 3 | 3 | 3 | 3 | 3 | 3 |
| | | | Bisphenol A | - | - | - | - | - | - | - | - | - | - | - | - | - | - |
| | | | H-4 | - | - | - | - | - | - | - | - | - | - | - | - | - | - |
| | Phenol compound other than Component (C) | | 4-tert-Butylcatechol | - | - | - | - | - | - | - | - | - | - | - | - | - | - |
| | Acid ester | | p⁻ Toluenesulfonic acid propyl ester | - | - | - | - | - | - | - | - | - | - | - | - | - | - |
| | H/E ratio | | | 1.0 | 1.0 | 1.0 | 1.0 | 1.0 | 1.0 | 1.0 | 1.0 | 1.0 | 1.0 | 1.0 | 1.0 | 1.0 | 1.0 |
| Characteristics of uncured resin | Viscosity at 70°C [mPa•s] | | | 236 | 240 | 244 | 248 | 274 | 280 | 260 | 230 | 210 | 220 | 200 | 220 | 350 | 200 |
| | Gelation time [min] | | | 4.9 | 3.8 | 2.8 | 1.8 | 0.8 | 4.1 | 3.9 | 3.7 | 3.5 | 3.5 | 2.5 | 3.0 | 4.9 | 3.3 |
| Characteristics of cured product of resin | Glass transition temperature [°C] | | | 188 - | 186 | 184 | 180 | 172 | 206 | 190 | 184 | 174 | 182 | 170 | 178 | 188 | 179 |
| Characteristics of fiber-reinforced composite material | Void fraction [%] | | | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| | H/W 0° compressive strength [MPa] | | | 1250 | 1230 | 1210 | 1170 | 1100 | 1270 | 1260 | 1200 | 1100 | 1180 | 1150 | 1200 | 1200 | 1100 |

**[Table 2]**

| | | | | Example 15 | Example 16 | Example 17 | Example 18 | Example 19 | Example 20 | Example 21 | Example 22 | Example 23 |
|---|---|---|---|---|---|---|---|---|---|---|---|---|
| Epoxy resin composition | Component (A) Glycidylamine type epoxy resins | | MY721 | 60 | 60 | 60 | 60 | 100 | 60 | 60 | 60 | 100 |
| | | | MY0600 | 0 | 0 | 0 | 0 | 0 | 0 | 0 | 0 | 0 |
| | Epoxy resins other than Component (A) | | EPON825 | 40 | 40 | 40 | 40 | 0 | 40 | 40 | 40 | 0 |
| | | | Celloxide 2021P | 0 | 0 | 0 | 0 | 0 | 0 | 0 | 0 | 0 |
| | Component (B) Aromatic amines | Liquid | jERCURE W | 0 | 25.1 | 25.1 | 25.1 | 29.4 | 25.1 | 25.1 | 25.1 | 29.4 |
| | | | Kayahard A-A | 31.9 | - | - | - | - | - | - | - | - |
| | | Solid | Lonzacure M-MIPA | 10.6 | 8.3 | 8.3 | 8.3 | 9.8 | 8.3 | 8.3 | 8.3 | 9.8 |
| | | | Lonzacure M-DIPA | 10.6 | 8.3 | 8.3 | 8.3 | 9.8 | 8.3 | 8.3 | 8.3 | 9.8 |
| | Alicyclic amine | | Ancamine 2049 | - | - | - | - | - | - | - | - | - |
| | Component (C) Compounds having at least two aromatic rings having phenolic hydroxy groups | | Bisphenol S | 3 | - | - | - | - | - | - | - | - |
| | | | Bisphenol A | - | 3 | 5 | 10 | 20 | - | - | - | - |
| | | | - H-4 | - | - | - | - | - | 5 | 10 | 15 | 20 |
| | Phenol compound other than Component (C) | | 4-tert-Butylcatechol | - | - | - | - | - | - | - | - | - |
| | Acid ester | | p-Toluenesulfonic acid propyl ester | - | - | - | - | - | - | - | - | - |
| | H/E ratio | | | 1.0 | 1.0 | 1.0 | 1.0 | 1.0 _{.} | 1.0 | 1.0 | 1.0 | 1.0 |
| Characteristics of uncured resin | Viscosity at 70°C [mPa•s] | | | 290 | 242 | 244 | 249 | 410 | 242 | 253 | 263 | 400 |
| | Gelation time [min] | | | 4.5 | 4.0 | 3.5 | 2.2 | 1.5 | 3.4 | 2.0 | 1.4 | 1.3 |
| Characteristics of cured product of resin | Glass transition temperature [°C] | | | 181 | 181 | 178 | 172 | 175 | 183 | 177 | 171 | 176 |
| Characteristics of fiber-reinforced composite material | Void fraction [%] | | | < 0.1 | < 0.1 | < 0.1 | < 0.1 | < 0.1 | < 0.1 | < 0.1 | < 0.1 | < 0.1 |
| | H/W 0° compressive strength [MPa] | | | 1120 | 1170 | 1140 | 1100 | 1140 | 1190 | 1130 | 1100 | 1150 |

**[Table 3]**

| | | | | Comparative Example 1 | Comparative Example 2 | Comparative Example 3 | Comparative Example 4 | Comparative Example 5 | Cpmparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|---|
| | Component (A) Glycidylamine type epoxy resins | | MY721 | 60 | 60 | 60 | 60 | 60 | 60 | 60 | 20 | 0 | 20 | 60 | 60 |
| | | | MY0600 | 0 | 0 | 0 | 0 | 0 | 0 | 0 | 0 | 0 | 0 | 0 | 0 |
| | resins other than Compcnent (A) | | EPON825 | 40 | 40 | 40 | 40 | 40 | 40 | 40 | 80 | 100 | 0 | 40 | 40 |
| | | | Cellaxide 2021P | 0 | 0 | 0 | 0 | 0 | 0 | 0 | 0 | 0 | 80 | 0 | 0 |
| | Component (B) Aromatic amines | Liquid | jERCURE W | 25.1 | 25.1 | 25.1 | 25.1 | 25.1 | 25.1 | 25.1 | 21.2 | 18.9 | 25.5 | 0 | 0 |
| | | | Kayahard A-A | - | - | - | - | - | - | - | - | - | - | - | - |
| | | Solid | Lonzacure M-MIPA | 8.3 | 8.3 | 8.3 | 8.3 | 8.3 | 8.3 | 8.3 | 7.1 | 6.3 | 8.5 | - | 32.2 |
| | | | Lonzacure M-DIPA | 8.3 | 8.3 | 8.3 | 8.3 | 8.3 | 8.3 | 8.3 | 7.1 | 6.3 | 8.5 | - | 32.2 |
| Epaxy resin composition | Alicyclic amine | | Ancamine 2049 | - | - | - | - | - | - | - | - | - | - | 45.6 | - |
| | Component (C) Compounds having at least two aromatic rings having phenolic hydroxy groups | | Bisphenol S | - | - | - | - | - | - | - | 3 | 3 | 3 | 3 | 3 |
| | | | Bisphenol A | - | - | - | - | - | - | - | - | - | - | - | - |
| | | | H-4 | - | - | - | - | - | - | - | - | - | - | - | - |
| | Phenol compound other than Component (C) | | 4-tert-Butylcatechol | - | 1 | 3 | 5 | - | - | - | - | - | - | - | - |
| | Acid ester | | p- Toluene sulfonic acid propyl ester | - | - | - | - | 1 | 3 | 5 | - | - | - | - | - |
| | H/E ratio | | | 1.0 | 1.0 | 1.0 | 1.0 | 1.0 | 1.0 | 1.0 | 1.0 | 1.0 | 1.0 | 1.0 | 1.0 |
| Characteristics of uncured resir | Viscosity at 70°C [mPa•s] | | | 235 | 236 | 238 | 240 | 235 | 236 | 238 | 198 | 178 | 90 | 200 | 1000 |
| | Gelation time [min] | | | 8.3 | 6.3 | 5.1 | 4.1 | 5.5 | 3.2 | 1.7 | 3.4 | 3.2 | >10 | 2.0 | >10 |
| Characteristics of cured product of resin | Glass transition temperature [°C] | | | 190 | 187 | 178 | 169 | 183 | 169 | 158 | 169 | 160 | 151 | 163 | 190 |
| Characteristics of fiber-reinforced composire material | Void fraction [%] | | | < 0.1 | 0.1 | 0.2 | 0.5 | 0.1 | 0.2 | 0.5 | < 0.1 | < 0.1 | < 0.1 | < 0.1 | < 0.1 |
| | H/W 0° compressive strength [MPa] | | | 1260 | 1090 | 1020 | 900 | 1080 | 990 | 850 | 950 | 800 | 750 | 800 | 1090 |

### INDUSTRIAL APPLICABILITY

The two-pack type epoxy resin composition for the fiber-reinforced composite material according to the present invention is excellent in high-speed curability and high heat resistance, and therefore, makes it possible to provide a fiber-reinforced composite material with high quality with good productivity, for example, by an RTM method. Accordingly, the progress of the application of the fiber-reinforced composite material to the use particularly in an aeroplane and an automobile as well as the contribution to the improvement of the fuel consumption and the reduction in global warming gas emissions by further lightening of weight can be expected.

## Claims

1. A two-pack type epoxy resin composition for a fiber-reinforced composite material, comprising components (A) to (C) below, the epoxy resin composition comprising:
an epoxy base resin liquid which comprises 30 mass% or more and 100 mass% or less of a component (A); and
a curing agent liquid which comprises a component (B),
wherein,
the component (A) is a glycidylamine type epoxy resin;
the component (B) is an aromatic amine; and
the component (C) is a compound having at least two aromatic rings each of which has a phenolic hydroxy group, wherein the component (B) is a mixture of a liquid aromatic amine and a solid aromatic amine, wherein the term 'liquid' refers to a state where a viscosity at 25°C is 1000 Pa•s or lower and wherein the term 'solid' refers to a state where a viscosity at 25°C is higher than 1000 Pa•s where viscosity is measured using the JIS Z8803(1991) method described in the present specification.

2. The two-pack type epoxy resin composition for the fiber-reinforced composite material according to claim 1, wherein the component (A) is a tri- or higher functional glycidylamine type epoxy resin.

3. The two-pack type epoxy resin composition for the fiber-reinforced composite material according to claim 1 or 2, wherein the component (A) is a glycidylamine type epoxy resin selected from N,N,N',N'-tetraglycidyldiaminodiphenylmethane, triglycidylaminophenol, or a derivative thereof or an isomer thereof.

4. The two-pack type epoxy resin composition for the fiber-reinforced composite material according to any one of claims 1 to 3, wherein the epoxy base resin liquid contains a liquid bisphenol-type epoxy resin.

5. The two-pack type epoxy resin composition for the fiber-reinforced composite material according to any one of claims 1 to 4 wherein the component (C) is a bisphenol compound containing at least two phenolic hydroxy groups.

6. The two-pack type epoxy resin composition for the fiber-reinforced composite material according to any one of claims 1 to 5 wherein the component (C) has an acid dissociation constant (pKa) of 7 or more and 9.8 or less.

7. The two-pack type epoxy resin composition for the fiber-reinforced composite material according to any one of claims 1 to 6 which contains 1 part by mass or more and 20 parts by mass or less of the component (C) based on 100 parts by mass of a total of the epoxy resin contained in the epoxy base resin liquid.

8. The two-pack type epoxy resin composition for the fiber-reinforced composite material according to any one of claims 1 to 7 which has a viscosity at 70°C measured using an E-type viscometer of 10 mPa•s or higher and 500 mPa•s or lower, wherein the viscosity at 70°C is measured as in JIS Z8803 (1991).

9. The two-pack type epoxy resin composition for the fiber-reinforced composite material according to any one of claims 1 to 8 which is used for an RTM method.

10. A fiber-reinforced composite material obtained by combining the two-pack type epoxy resin composition for the fiber-reinforced composite material according to any one of claims 1 to 9 with a reinforcing fiber and curing them.

11. The fiber-reinforced composite material according to claim 10 wherein the reinforcing fiber is a carbon fiber.

## Patentansprüche

1. Epoxidharzzusammensetzung vom Zweikomponententyp für ein faserverstärktes Verbundmaterial, welche die nachstehenden Komponenten (A) bis (C) umfasst, wobei die Epoxidharzzusammensetzung Folgendes umfasst:
ein Flüssigharz auf Epoxybasis, die 30 Massen-% oder mehr und 100 Massen-% oder weniger einer Komponente (A) umfasst; und
eine Härterflüssigkeit, die eine Komponente (B) umfasst,
wobei
die Komponente (A) ein Epoxidharz vom Glycidylamintyp ist;
die Komponente (B) ein aromatisches Amin ist; und
die Komponente (C) eine Verbindung mit zumindest zwei aromatischen Ringen ist, die jeweils eine phenolische Hydroxygruppe aufweisen, wobei die Komponente (B) ein Gemisch aus einem flüssigen aromatischen Amin und einem festen aromatischen Amin ist, wobei die Bezeichnung .flüssig' für einen Zustand steht, bei dem die Viskosität bei 25 °C 1000 Pa·s oder weniger beträgt, und wobei die Bezeichnung ,fest' für einen Zustand steht, bei dem die Viskosität bei 25 °C mehr als 1000 Pa.s beträgt, wobei die Viskosität unter Verwendung des in der vorliegenden Erfindung Patentschrift beschriebenen Verfahrens JIS Z8803(1991) gemessen wird.

2. Epoxidharzzusammensetzung vom Zweikomponententyp für ein faserverstärktes Verbundmaterial nach Anspruch 1, wobei die Komponente (A) ein tri- oder höherfunktionelles Epoxidharz vom Glycidylamintyp ist.

3. Epoxidharzzusammensetzung vom Zweikomponententyp für ein faserverstärktes Verbundmaterial nach Anspruch 1 oder 2, wobei die Komponente (A) ein Epoxidharz vom Glycidylamintyp ist, das aus N,N,N',N',Tetraglycidyldiaminodiphenylmethan, Triglycidylaminophenol oder einem Derivat davon oder einem Isomer davon ausgewählt ist.

4. Epoxidharzzusammensetzung vom Zweikomponententyp für ein faserverstärktes Verbundmaterial nach einem der Ansprüche 1 bis 3, wobei das Flüssigharz auf Epoxybasis ein flüssiges Epoxidharz vom Bisphenoltyp enthält.

5. Epoxidharzzusammensetzung vom Zweikomponententyp für ein faserverstärktes Verbundmaterial nach einem der Ansprüche 1 bis 4, wobei die Komponente (C) eine Bisphenolverbindung ist, die zumindest zwei phenolische Hydroxygruppen enthält.

6. Epoxidharzzusammensetzung vom Zweikomponententyp für ein faserverstärktes Verbundmaterial nach einem der Ansprüche 1 bis 5, wobei die Komponente (C) eine Säuredissoziationskonstante (pKa) von 7 oder mehr und 9,8 oder weniger aufweist.

7. Epoxidharzzusammensetzung vom Zweikomponententyp für ein faserverstärktes Verbundmaterial nach einem der Ansprüche 1 bis 6, die 1 Massenteil oder mehr und 20 Massenteile oder weniger der Komponente (C), bezogen auf 100 Massenteile des gesamten Epoxidharzes im Flüssigharz auf Epoxybasis, umfasst.

8. Epoxidharzzusammensetzung vom Zweikomponententyp für ein faserverstärktes Verbundmaterial nach einem der Ansprüche 1 bis 7, die eine Viskosität bei 70 °C, gemessen mit einem Viskosimeter vom E-Typ, von 10 mPa·s oder mehr und 500 mPa·s oder weniger aufweist, wobei die Viskosität bei 70 °C wie in HIS Z8803 (1991) gemessen wird.

9. Epoxidharzzusammensetzung vom Zweikomponententyp für ein faserverstärktes Verbundmaterial nach einem der Ansprüche 1 bis 8, die für ein RTM-Verfahren verwendet wird.

10. Faserverstärktes Verbundmaterial, erhalten durch Vereinigen einer Epoxidharzzusammensetzung vom Zweikomponententyp für ein faserverstärktes Verbundmaterial nach einem der Ansprüche 1 bis 9 mit Verstärkungsfasern und Härten derselben.

11. Faserverstärktes Verbundmaterial nach Anspruch 10, wobei die Verstärkungsfasern Kohlenstofffasern sind.

## Revendications

1. Composition de résine époxy du type à deux composants pour un matériau composite renforcé par des fibres, comprenant les composants (A) à (C) ci-dessous, la composition de résine époxy comprenant :
une résine époxy de base liquide qui comprend 30 % en masse ou plus et 100 % ou moins d'un composant (A) ; et
un agent durcisseur liquide qui comprend un composant (B),
dans laquelle
le composant (A) est une résine époxy de type glycidylamine ;
le composant (B) est une amine aromatique ; et
le composant (C) est un composé ayant au moins deux cycles aromatiques ayant chacun un groupe hydroxy phénolique,
lequel composant (B) est un mélange d'une amine aromatique liquide et d'une amine aromatique solide, où le terme "liquide" se réfère à un état dans lequel la viscosité à 25°C est de 1000 Pa.s ou moins et où le terme "solide" se réfère à un état dans lequel la viscosité à 25°C est supérieure à 1000 Pa.s, laquelle viscosité est mesurée conformément à la méthode de la norme JIS Z8803 (1991), décrite dans le présent fascicule.

2. Composition de résine époxy du type à deux composants pour un matériau composite renforcé par des fibres selon la revendication 1, dans laquelle le composant (A) est une résine époxy de type glycidylamine trifonctionnelle ou de fonctionnalité supérieure.

3. Composition de résine époxy du type à deux composants pour un matériau composite renforcé par des fibres selon la revendication 1 ou 2, dans laquelle le composant (A) est une résine époxy de type glycidylamine choisie parmi le N,N,N',N'-tétraglycidyldiaminodiphénylméthane, le triglycidylaminophénol, un dérivé de ceux-ci, et un isomère de ceux-ci.

4. Composition de résine époxy du type à deux composants pour un matériau composite renforcé par des fibres selon l'une quelconque des revendications 1 à 3, dans laquelle la résine époxy de base liquide contient une résine époxy de type bisphénol liquide.

5. Composition de résine époxy du type à deux composants pour un matériau composite renforcé par des fibres selon l'une quelconque des revendications 1 à 4, dans laquelle le composant (C) est un composant bisphénol contenant au moins deux groupes hydroxy phénoliques.

6. Composition de résine époxy du type à deux composants pour un matériau composite renforcé par des fibres selon l'une quelconque des revendications 1 à 5, dans laquelle le composant (C) a une constante de dissociation acide (pKa) de 7 ou plus et de 9,8 ou moins.

7. Composition de résine époxy du type à deux composants pour un matériau composite renforcé par des fibres selon l'une quelconque des revendications 1 à 6, qui contient 1 partie en masse ou plus et 20 parties en masse ou moins du composant (C) pour 100 parties en masse du total de la résine époxy contenue dans la résine époxy de base liquide.

8. Composition de résine époxy du type à deux composants pour un matériau composite renforcé par des fibres selon l'une quelconque des revendications 1 à 7, qui a une viscosité à 70°C, mesurée au moyen d'un viscosimètre de type E, de 10 mPa.s ou plus et de 500 mPa.s ou moins, laquelle viscosité à 70°C est mesurée conformément à la norme JIS Z8803 (1991).

9. Composition de résine époxy du type à deux composants pour un matériau composite renforcé par des fibres selon l'une quelconque des revendications 1 à 8, qui est utilisée pour un procédé RTM.

10. Matériau composite renforcé par des fibres obtenu par combinaison de la composition de résine époxy du type à deux composants pour un matériau composite renforcé par des fibres selon l'une quelconque des revendications 1 à 9 avec des fibres de renforcement, et durcissement de celles-ci.

11. Matériau composite renforcé par des fibres selon la revendication 10, dans lequel les fibres de renforcement sont des fibres de carbone.
